# EUROPÄISCHE PATENTANMELDUNG

(11) **EP 1 801 418 A1**
(43) Veröffentlichungstag der Anmeldung: **27.06.2007**
(21) Anmeldenummer: 06025486.9
(22) Anmeldetag: 08.12.2006
(51) Int. Cl.: F04C 2/16, F04C 11/00, F04C 13/00, B29C 47/42, F04C 2/18

(54) **Planeten-Zahnradpumpe**

(30) Priorität: 22.12.2005 DE 102005061667
(71) Anmelder: VMI - AZ Extrusion GmbH, 93486 Runding (DE)
(72) Erfinder: Uplms, Reinhard, Dr.-Ing., 30419 Hannover (DE)
(74) Vertreter: Baronetzky, Klaus

(57) **Zusammenfassung**

Die Erfindung betrifft eine Planeten-Zahnradpumpe, insbesondere in Kombination mit einem Extruder, für das Fördern und/oder Dosieren von viskosen Massen wie natürlichem oder künstlichem Kautschuk oder Mischungen mit diesem, mit einem Sonnenrad (12), das mit mehreren Planetenrädern (20, 22, 24, 26) kämmt. Mindestens zwei Einzelpumpen der Planeten-Zahnradpumpe (10) sind mit drehfest miteinander verbundenen Sonnenrädern ausgebildet, deren Planetenräder (20, 22, 24, 26) je radial und in Umfangsrichtung betrachtet, versetzt zueinander gelagert sind.

## Beschreibung

Die Erfindung betrifft eine Planeten-Zahnradpumpe, insbesondere für das Pumpen von viskosen Massen wie Kautschuk oder dergleichen, die auch insbesondere in Kombination mit einem Extruder einsetzbar ist, gemäß dem Oberbegriff von Anspruch 1.

Planeten-Zahnradpumpen sind seit langem bekannt, wobei beispielhaft auf die DE-OS 101 54 0 zur Wiedergabe einer neueren Entwicklung zu verweisen ist.

Bei dieser Planeten-Zahnradpumpe wird das Sonnenrad unmittelbar von der Extruderschnecker mitgenommen und es erfolgt eine axiale Anströmung in an sich bekannter Weise. Zur Bereitstellung der erwünschten Pumpwirkung sind in diesem Ausführungsbeispiel drei Planetenräder gleichmäßig um den Umfang des Sonnenrads verteilt, die über einen Planetenradträger miteinander verbunden sind.

Andererseits steht durch die Realisierung von drei Planetenrädern eine vergleichsweise geringe Umfangsdichtlänge des Sonnenrads zur Verfügung. Untersuchungen haben gezeigt, dass hierdurch ein vergleichsweise großer Leckagevolumenstrom entsteht, der der Pumpwirkung entgegenwirkt.

Es versteht sich, dass die Größe des Leckagevolumenstroms einerseits von der Spaltlänge und andererseits von der Spalthöhe abhängt. Man ist daher bemüht, mit einer möglichst geringen Spalthöhe zu arbeiten. Dieses Bestreben findet allerdings seine Grenze an der Notwendigkeit, die Berührung zwischen den umlaufenden Zähnen und dem Gehäuse sicher zu vermeiden.

Vor Vergrößerung des Volumenstroms, bzw. zur Erhöhung der Pumpleistung trotz der geringen Dichtungslänge ist es vorgeschlagen wurden, kurzerhand die axiale Baulänge der Planeten-Zahnradpumpe zu erhöhen.

Hiermit wird allerdings ein weiterer Nachteil erkauft, denn die frei tragende Länge der Wellen wird dann je länger, so dass die mögliche Durchbiegung - gerade auch bei einem entsprechend hohem Druck - zunimmt.

Außerdem ist die Befüllung einer axial längeren Planeten-Zahnradpumpe lediglich dann vollständig möglich, wenn ein erheblicher Eingangdruck zur Verfügung steht. Die eintretende Masse muss praktisch über die gesamte axiale Länge der Verzahnung strömen, so dass die Scherwirkung und damit die Temperatur der Kautschukmasse zunimmt.

Ein weiteres - eher langfristiges - Problem ist die höhere Belastung der Lagerungen der Planetenräder bei Verwendung von zwei Planetenrädern anstelle von drei, vier oder gar fünf Planetenrädern. Durch die erhöhte Lagerbelastung nimmt auch der Verschleiß zu.

Ferner sind mehrstufige Zahnradpumpen, bei denen pro Stufe je der Druck um ein gewisses Maß erhöht wird, an sich bekannt. Ein Beispiel hierfür ist aus der DE-A1-196 15 725 ersichtlich. Bei dieser Lösung wird pro Pumpenstufe der Druck erhöht, so dass zwar der erzeugbare Differenzdruck der Zahnradpumpe verbessert ist, der Durchsatz jedoch unbefriedigend ist.

Ferner ist es bereits vorgeschlagen wurden, mehrere Zahnrad-Planetenpumpen einzusetzen, um die gewünschte Pumpwirkung in Hinblick auf die hohe Ausgangsleistung von Extrudern bereitzustellen. Derartige Mehrfachpumpen sind zum einen schwierig zu synchronisieren. Zum anderen erfordern sie erhebliche Mehrinvestitionen, was unerwünscht ist.

Daher liegt der Erfindung die Aufgabe zugrunde, eine Planeten-Zahnradpumpe gemäß dem Oberbegriff von Anspruch 1 zu schaffen, die bei günstigen Kosten eine schonende Förderung auch bei hoher Leistung trotz geringer Leckage erlaubt.

Diese Aufgabe wird erfindungsgemäß durch Anspruch 1 gelöst. Vorteilhafte Weiterbildungen ergeben sich aus den Unteransprüchen.

Die erfindungsgemäße Lösung einer Planeten-Zahnradpumpe zeichnet sich durch eine kompakte Anordnung bei geringen Kosten und schonender Materialbehandlung trotz hoher Förderleistung aus. Durch die versetzte Anordnung der Planetenräder lässt sich eine ausgesprochen lange Dichtfläche bereitstellen, die knapp 180° des Umfangs beträgt und insofern eine geringe Leckage ermöglicht.

Ferner ist durch die drehmomentfeste Anordnung der Sonnenräder, insbesondere einer koaxialen Anordnung, sichergestellt, dass beide Einzelpumpen mit gleicher Geschwindigkeit und damit auch mit gleicher Förderrate laufen. Durch die versetzte Anordnung ist es möglich, die Druckschwankungen, wie sie bei Planeten-Zahnradpumpen auftreten, zu vergleichmäßigen. Auch wenn hier eine Planeten-Zahnradpumpe mit zwei Einzelpumpen beschrieben ist, versteht es sich, dass nach dem gleichen Schema auch eine Mehrzahl, beispielsweise auch drei oder sogar fünf Einzelpumpen miteinander kombiniert werden können.

Jede Einzelpumpe oder Einzel-Zahnradpumpe weist eine kurze axiale Ausgestaltung der Wellen auf, so dass Durchbiegungen nicht zu befürchten sind, und andererseits auch bei hohem Pumpdruck eine vergleichsweise niedrige Lagerbelastung vorliegt.

Bevorzugt sind die Planetenräder symmetrisch zueinander versetzt, also bei zwei Pumpen um je 90°, oder bei drei Pumpen um je 60°. Die Sonnenräder sind je über einen Dichtring bzw. bei mehr als zwei Einzelpumpen über eine entsprechende Anzahl von Dichtringen gegeneinander abgedichtet. Die Fütterung der Einzelpumpen bzw. die Abgabe des geförderten Materials erfolgt über Kanäle, die sich je winkelversetzt gegeneinander erstrecken und deren Ausgestaltung an die Erfordernisse anpassbar ist. Beispielsweise kann der Strömungskanal der letzten Einzelpumpe ausgangsseitig verengt sein, um den Ausgangswiderstand zu vergleichmäßigen.

Auch wenn hier gerade verzahnte Planeten-Zahnradpumpen als bevorzugt beschrieben sind, versteht es sich, dass anstelle dessen auch ohne weiteres schrägverzahnte Planeten-Zahnradpumpen eingesetzt werden können.

Erfindungsgemäß ist ferner kein besonders hoher Eingangspumpdruck nötig, denn die axiale Baulänge der Einzelpumpen ist recht gering, so dass das eintretende Material recht leicht die miteinander kämmenden Zähne von Sonnenrad bzw. Planetenrädern befüllen kann.

Die erfindungsgemäßen Planeten-Zahnradpumpen weisen bevorzugt gehäusefeste Planetenradträger auf. Dies ermöglicht die Realisierung von festen Strömungskanälen in einem beliebigen Winkelversatz in Umfangsrichtung betrachtet neben den Planetenrädern.

Weitere Vorteile, Einzelheiten und Merkmale ergeben sich aus der nachfolgenden Beschreibung eines Ausführungsbeispiels anhand der Zeichnungen.

Es zeigen:
- Fig. 1: eine Stirnansicht einer Ausführungsform einer erfindungsgemäßen Planeten-Zahnradpumpe von der Zulaufseite;
- Fig. 2: die Ausführungform gemäß Fig. 1 in einer Stirnansicht von der Ausgangsseite;
- Fig. 3: ein Schnitt entlang der Linie A-A aus Fig. 2;
- Fig. 4: ein Schnitt entlang der Linie B-B aus Fig. 2; und
- Fig. 5: perspektivische Sicht eines "Innenlebens" einer Zahnradpumpe.

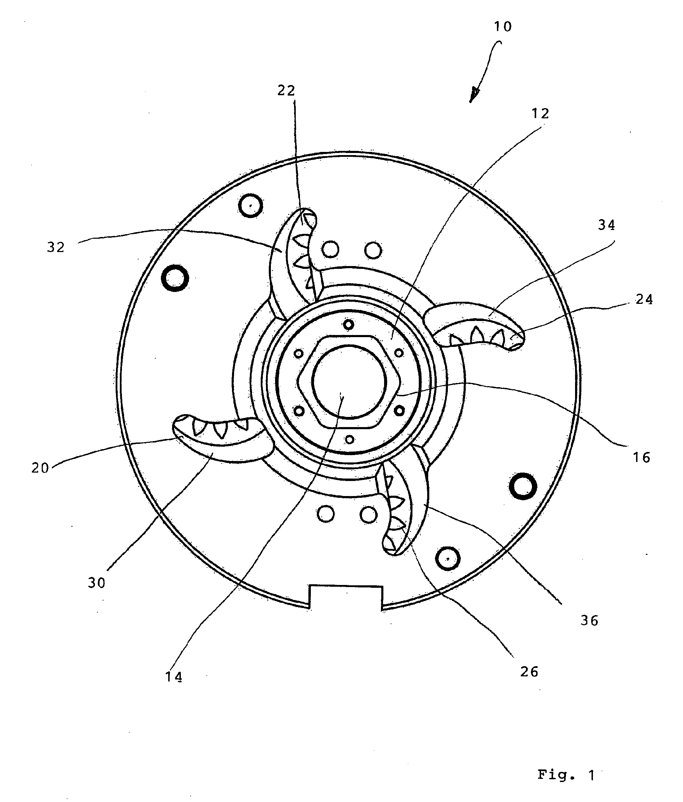

Fig. 1 zeigt eine Ausführungsform einer erfindungsgemäßen Planeten-Zahnradpumpe 10 in Stirnansicht. Die Planeten-Zahnradpumpe 10 weist ein in Fig. 1 nicht dargestelltes Sonnenrad 12 auf, das mit einer Kupplung 14 drehfest verbunden ist. Die Kupplung 14 weist einen Innensechskant 16 auf, der dem Drehantrieb des Sonnenrads 12 dient und beispielsweise mit einem Außensechskant an der Spitze einer Extruderschnecke formschlüssig verbindbar ist.

Die erfindungsgemäße Planeten-Zahnradpumpe 10 weist ferner Planetenräder 20, 22, 24 und 26 auf, die je teilweise aus Fig. 1 ersichtlich sind. Die Planetenräder 20 bis 26 sind gleichmäßig um den Umfang des Sonnenrads 12 verteilt, erstrecken sich also im Winkel von je 90° zueinander. Jedoch sind sie auf verschiedenen Ebenen angeordnet und unterschiedlichen Einzel-Zahnradpumpen zugehörig, wobei die Planetenräder 20 und 24 auf einer Ebene und die Planetenräder 22 und 26 auf einer anderen Ebene angeordnet sind.

Achsparallel zu dem Sonnenrad und zu dem je betroffenen Planetenrad 20 bis 26 hin verläuft je ein Eingangs-Strömungskanal 30, 32, 34 bzw. 36. In der dargestellten Ausführungsform sind die Eingangs-Strömungskanäle im Querschnitt etwas der Form der Planetenräder an deren Außenumfang folgend gebogen. Die Breite jedes Strömungskanals nimmt zudem zum Sonnenrad hin deutlich zu und endet an einer Stelle, die eine teilweise auch axiale Zuführung der zu fördernden Masse zu dem Sonnenrad erlaubt.

In diesem Zusammenhang ist aus Fig. 1 ersichtlich, dass die Strömungskanäle 30 und 34 für die zweite, stromab angeordnete Pumpe radial etwas weiter außen beginnen, nachdem sie radial außerhalb des Sonnenrads der ersten Pumpe durchgeführt werden müssen.

Wie aus Fig. 1 ersichtlich ist, steht aus in Umfangsrichtung betrachtet ausreichend Platz zur Verfügung, die verschiedenen Strömungskanäle aufzunehmen.

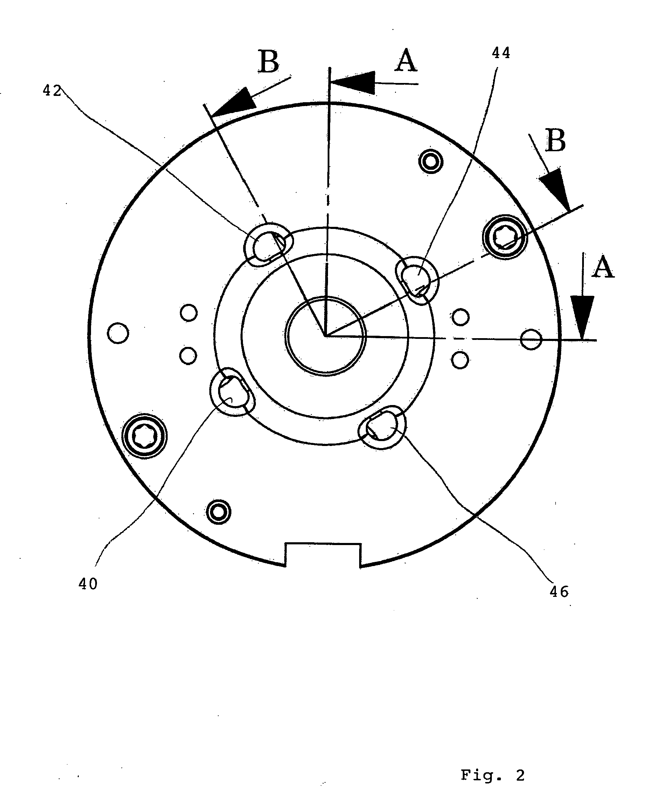

So erstrecken sich die Ausgangs-Strömungskanäle 40, 42, 44 und 46 gemäß Fig. 2 je an einer Stelle, die in Umfangsrichtung versetzt gegenüber den Eingangs-Strömungskanälen ist, so dass insofern je keine Überlappung zu befürchten ist.

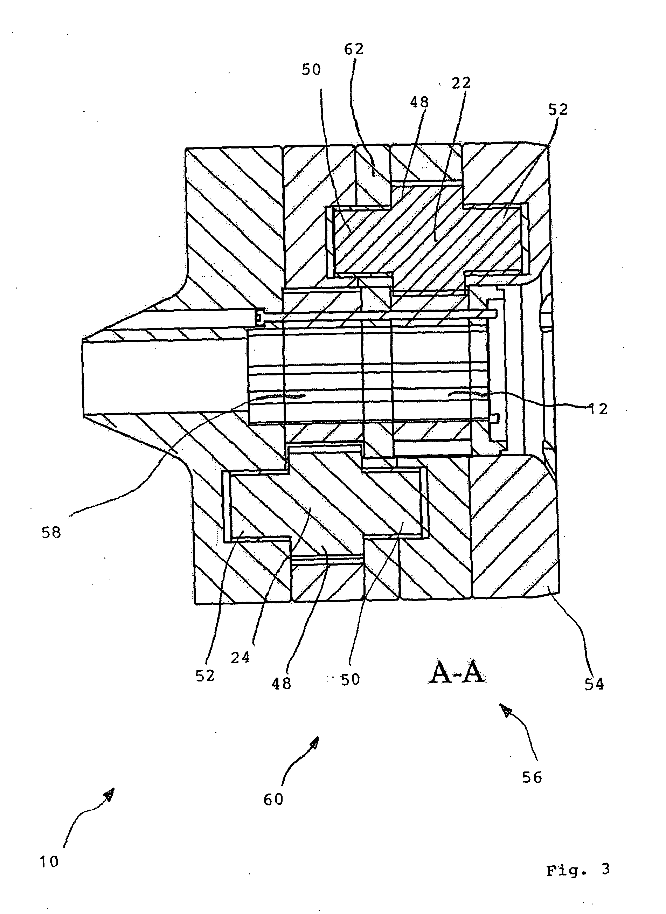

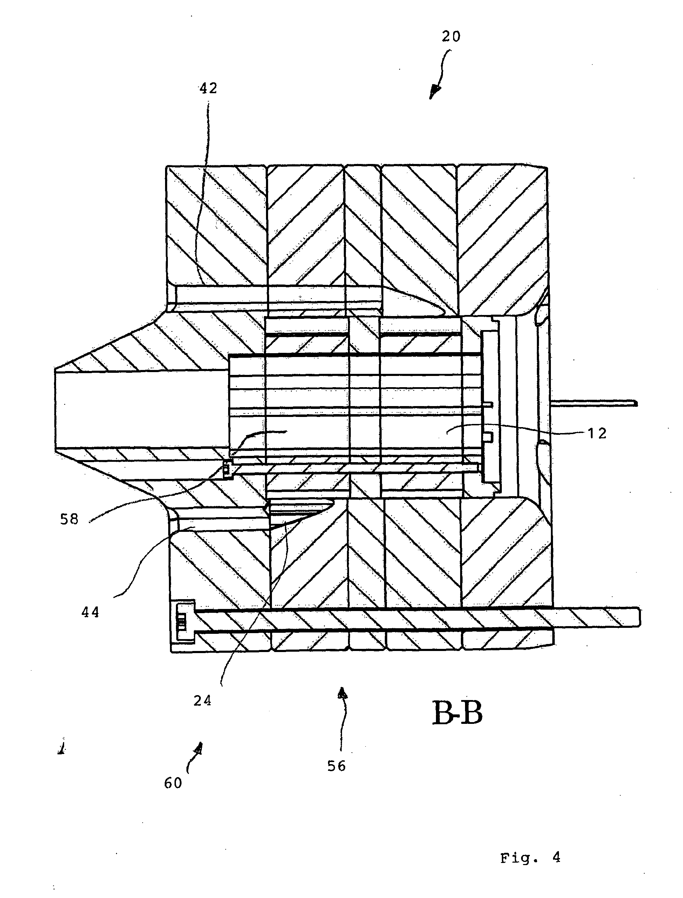

Aus Fig. 2 ist ferner ersichtlich, in welcher Weise die Schnitte entsprechend den Pfeilen A-A (Fig. 3) sowie B-B (Fig. 4) belegt sind.

Aus Fig. 3 ist ersichtlich, in welcher Weise sich die Planetenräder 22 und 24 gegeneinander versetzt erstrecken. In Umfangsrichtung betrachtet, sind sie um etwa 90° gegeneinander versetzt, und axial soweit versetzt, dass ihre Zahnabschnitte 48 einander nicht überlappen, hingegen wohl ihre Lagerabschnitte 50 und 52.

Wie aus Fig. 3 ersichtlich ist, weist jedes Planetenrad eine vergleichsweise kurze Länge und einem im Verhältnis zu seiner Länge großen Durchmesser auf. Die Gefahr von Durchbiegungen ist hierdurch ausgesprochen gering, so dass das Planetenrad nicht am Gehäuse 54 der Planeten-Zahnradpumpe 10 schleifen kann.

Die Planetenräder 22 und 26 kämmen mit dem Sonnenrad 12 einer ersten Einzel-Zahnradpumpe 56, während die Planetenräder 20 und 24 mit einem Sonnenrad 58 einer zweiten Einzel-Zahnradpumpe 60 kämmen. Die beiden Sonnenräder sind über eine Trennwand 62, gegen die sie abgedichtet und an welcher sie gelagert sind, von einander getrennt, und das Gehäuse 54 umschließt die Sonnenräder 12 und 58, die auf einer gemeinsamen Welle angebracht sind, samt den Planetenrädern 20 bis 26 kompakt und massiv. Anstelle einer durchgehenden Trennwand kann auch ein Dichtring vorgesehen sein, der sich zwischen den Sonnenrädern 12 und 58 erstreckt.

Fig. 4 zeigt ebenfalls einen Schnitt durch die erfindungsgemäße Planeten-Zahnradpumpe 10, jedoch entlang der Schnittlinie B-B.

Aus Fig. 4 sind Ausgangs-Strömungskanäle 42 und 44 ersichtlich, nämlich ein Ausgangs-Strömungskanal 42 für die erste Einzelpumpe 56 und ein Ausgangs-Strömungskanal 44 für die zweite Einzelpumpe 60. In an sich bekannter Weise erstrecken die Ausgangs-Strömungskanäle 42 und 44 sich so, dass bei Drehung des Sonnenrads 12 bzw. 58 die Masse, die zu fördern ist, verdrängt wird, so dass sie aus dem Strömungskanal austritt. Dort entsteht je erheblicher Druck, der dazu neigt, zu einer Gegenströmung, beispielsweise über die Umgangsfläche des Sonnenrads, zu führen, was sich als Leckagestrom ausdrückt.

Erfindungsgemäß ist die Umfangsfläche jedoch vergleichsweise lang und erstreckt sich über einen Winkel von etwa 160°. Zudem ist sie vergleichsweise schmal, denn die Sonnenräder 12 und 58 sind aufgeteilt in zwei Einzel-Sonnenräder. Der dort entstehende Druck wirkt auch auf die Lager, so dass die durch den Druck entstehenden Kräfte von den massiven Lagern der Planetenrädern bzw. auch durch das Lager des Sonnenrads aufgenommen werden müssen.

In dem dargestellten Ausführungsbeispiel weist der Strömungskanal 42 einen etwas größeren Strömungsquerschnitt als der Strömungskanal 44 auf, um die unterschiedlichen Strömungswiderstände mindestens teilsweise zu kompensieren.

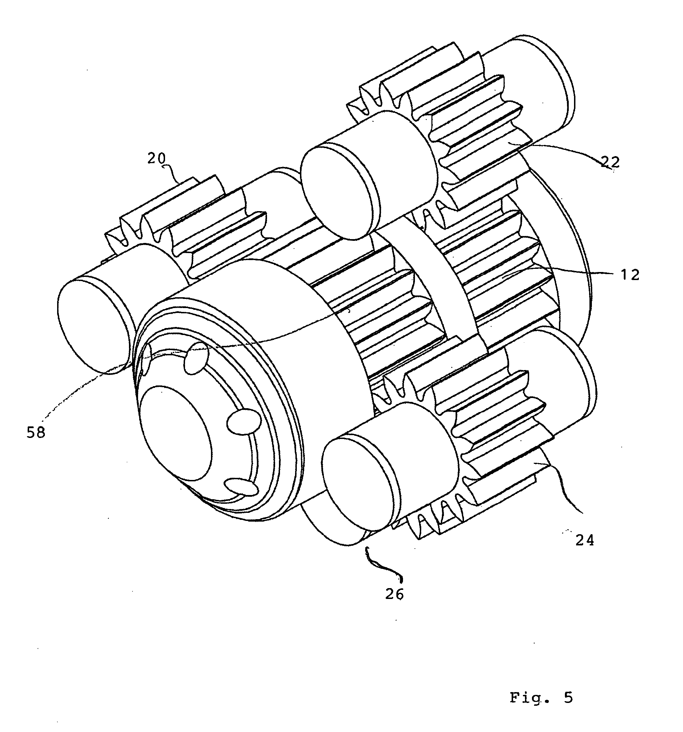

Aus Fig. 5 ist das "Innenleben" der erfindungsgemäßen Zahnradpumpe perspektivisch ersichtlich. Gleiche Bezugszeichen weisen hier wie auch in weiteren Figuren auf gleiche Teile hin.

## Patentansprüche

1. Planeten-Zahnradpumpe, insbesondere in Kombination mit einem Extruder, für das Fördern und/oder Dosieren von viskosen Massen wie natürlichem oder künstlichem Kautschuk oder Mischungen mit diesem oder Polymerschmelzen, mit einem Sonnenrad (12), das mit mehreren Planetenrädern (20, 22, 24, 26) kämmt, **dadurch gekennzeichnet, dass** mindestens zwei Einzelpumpen der Planeten-Zahnradpumpe (10) mit drehfest miteinander verbundenen Sonnenrädern ausgebildet sind, deren Planetenräder (20, 22, 24, 26) je axial und in Umfangsrichtung betrachtet, versetzt zueinander gelagert sind.

2. Planeten-Zahnradpumpe nach Anspruch 1, **dadurch gekennzeichnet, dass** jede Einzelpumpe zwei Planetenräder aufweist, die insbesondere in Umfangsrichtung betrachtet im Winkel von 90° zueinander angeordnet sind.

3. Zahnradpumpe nach Anspruch 1 oder 2, **dadurch gekennzeichnet, dass** Zulauf-Strömungskanäle und Ausgangs-Strömungskanäle (40, 42, 44, 46) der Einzelpumpen je in Umfangsrichtung betrachtet versetzt zu dem Planetenrad der benachbarten Einzelpumpe ausgebildet sind.

4. Zahnradpumpe nach einem der vorhergehenden Ansprüche, **dadurch gekennzeichnet, dass** die Einzelpumpen strömungstechnisch zueinander parallel geschaltet sind.

5. Zahnradpumpe nach einem der vorhergehenden Ansprüche, **dadurch gekennzeichnet, dass** jede Einzelpumpe den gesamten Differenzdruck der Planeten-Zahnradpumpe (10) aufbaut.

6. Zahnradpumpe nach einem der vorhergehenden Ansprüche, **dadurch gekennzeichnet, dass** Zulauf-Strömungskanäle je dem Sonnenrad (12) jeder Einzelpumpe benachbart, insbesondere im Bereich dessen Stirnfläche, enden.

7. Zahnradpumpe nach einem der vorhergehenden Ansprüche, **dadurch gekennzeichnet, dass** die Ausgangs-Strömungskanäle (40, 42, 44, 46) der Zahnradpumpe am Umfang des Sonnenrads (12) der betreffenden Einzelpumpe beginnen und axial weggeführt sind.

8. Zahnradpumpe nach einem der vorhergehenden Ansprüche, **dadurch gekennzeichnet, dass** die Zulauf-Strömungskanäle und die Ausgangs-Strömungskanäle (40, 42, 44, 46) der Einzelpumpen in Umfangsrichtung gegeneinander versetzt angeordnet sind.

9. Zahnradpumpe nach einem der vorhergehenden Ansprüche, **dadurch gekennzeichnet, dass** die Ausgangs-Strömungskanäle (40, 42, 44, 46) der dem Ausgang benachbarten Einzelpumpen einen Zusatz-Strömungswiderstand aufweisen, um die Ausgangs-Strömungswiderstände der Einzelpumpen aneinander anzugleichen.
